(19) Europäisches Patentamt
European Patent Office
Office européen des brevets

(11) Publication number: **0 275 589 B1**

# (12) EUROPEAN PATENT SPECIFICATION

(45) Date of publication of patent specification: **17.03.93** (51) Int. Cl.5: **H02K 41/03**

(21) Application number: **87202527.5**

(22) Date of filing: **15.12.87**

## (54) Linear stepping motor.

(30) Priority: **16.12.86 NL 8603199**

(43) Date of publication of application:
**27.07.88 Bulletin 88/30**

(45) Publication of the grant of the patent:
**17.03.93 Bulletin 93/11**

(84) Designated Contracting States:
**CH DE ES FR GB IT LI NL**

(56) References cited:
**DE-A- 2 229 711**
**FR-A- 1 337 222**
**FR-A- 2 107 736**
**FR-A- 2 152 529**
**US-A- 4 169 234**
**US-A- 4 439 698**

(73) Proprietor: **Product Suppliers AG**
**Baarerstrasse 12**
**Zug(CH)**

(72) Inventor: **Aarts, Mathias Leonardus Cornelis**
**Waterhoenlaan 48**
**NL-3722 TD Bilthoven(NL)**

(74) Representative: **Smulders, Theodorus A.H.J., Ir. et al**
**Vereenigde Octrooibureaux Nieuwe Parklaan 97**
**NL-2587 BN 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 275 589 B1

## Description

This invention relates to a linear stepping motor comprising a stationary section and a movable section, the stationary section including at least three energizing elements located in one row in the direction of displacement of the movable section and each having an energizing winding and at least one pole shoe of ferromagnetic material, with the dimensions of the successive energizing elements, as viewed in the direction of displacement of the movable section being essentially equal; the movable section having a bottom surface facing a top surface of the stationary section and at said bottom surface including at least two armature elements of a ferromagnetic material, spaced a pre-determined distance apart in the direction of displacement of the movable section; and means for supporting and guiding said movable section relatively to said stationary section with an air gap between the armature elements and the top surface of the stationary section.

A linear stepping motor of this kind is disclosed in NL-A-7103219. In this prior motor, the stationary section includes at least three energizing elements each consisting of a U-shaped pole shoe, around the central part of which a coil is arranged as an energizing winding. The legs of the U-shaped pole shoes are provided at the top with a plurality of teeth in the direction of displacement of the motor. The energizing elements, of which there are at least three, are fixedly mounted on a stationary support. In the prior motor, the movable section consists of a toothed bar supported on rollers in a frame at the longitudinal sides of the motor, so that the teeth of the movable bar, which are similar in shape to the teeth of the pole shoes, are located opposite the latter while maintaining an air gap. The pitch of the teeth on the bar has been selected so that when the teeth on the bar at the first energizing element are located exactly opposite to the teeth of the pole shoe thereof, the teeth of the bar are at the same time offset relatively to the opposed teeth of the pole shoe of the second, next energizing element by 1/3 rd pitch length in the positive direction of movement, and the teeth of the bar are offset relatively to the opposed teeth of the pole shoe of the third energizing element by 1/3 rd pitch length in the negative direction of movement. By activating successively the coils of the first, the second and the third energizing element, the bar can be energized for linear movement in the positive direction of movement of the motor, and by reversing the order of energizing the coils, the bar can be energized to move in the negative direction of movement. Accordingly, the bar can be moved by increments of 1/3 rd tooth width relatively to the stationary motor section. In the prior motor, the magnetic field lines of the energizing coils extend in a plane perpendicular to the direction of movement of the motor.

In the prior motor, when there is a change in position of the armature elements formed by the teeth on the movable bar from one of the stable positions, in which the teeth of one of the pole shoes are located opposite to those of the bar, in the direction of movement of the motor, the flux resistance to the magnetic field lines of the coil of the energizing element which determines the stable position will decrease only gradually. In fact, the amount of the air gap between the toothed armature elements and the teeth of the pole shoe increases only gradually. It is only when the teeth on the bar are located opposite to the notches between the teeth of the opposite pole shoe that there is a clearly larger air gap and hence a higher flux resistance to the field lines of the coil of the energizing element. As a result, the prior motor has the drawbacks that the stable positions of the armature elements are not accurately defined and that the movable section of the motor can be moved out of its stable position by a slight disturbance, and when displaced from one stable position to a next, by energizing the next energizing element, will not rapidly and accurately assume the stable position defined by that element, but instead will tend to occupy that position only after several oscillations around that position.

It is an object of the present invention to provide a linear stepping motor which does not have these disadvantages, and whose movable section can move very rapidly from one position to the next position, with the position of the movable section in the next position being rapidly fixed without oscillations around such stable position and without the movable section being capable of readily leaving the stable position reached.

For this purpose the invention provides a linear stepping motor of the above kind in which the pole shoes are arranged between the successive energizing windings; with the successive energizing windings being so formed that their magnetic field lines extend substantially parallel to the direction of displacement of the movable section; and whereby the armature elements are separate members arranged on a material having a low magnetic permeability, with the dimension of each of the armature elements, viewed in the direction of displacement of the motor, being essentially equal to the distance between the pole shoes bordering one energizing winding.

The invention is based on the insight that a very fast, stable, and accurate positioning of the movable section of a stepping motor can be obtained, if a slight displacement from one of the stable positions results

in a large change in the air gap between the activated energizing element and the associated armature element, whereby the magnetic flux resistance exhibits a large bound. As the energizing winding seeks a condition in which the armature element occupies such a position that the flux resistance to the magnetic field lines is minimal, the armature element will very rapidly seek the position in which it is located exactly between the pole shoes and the activated energizing element. To realize all this, the dimension of the armature element should deviate no more than 1% from the distance between the two pole shoes of an energizing element.

It is noted that Fr-A-2,107,736 discloses a linear stepping motor with a stationary section including three energizing elements located in one row in the direction of displacement of the motor, each energizing element including a toroidal energizing winding against the side surfaces and circumferential surface of which a pole shoe of ferromagnetic material is arranged, which energizing elements take the form of coaxial, annular electromagnets, and with a shaft carrying three armature elements of a ferromagnetic material extending through the central aperture of the successive electromagnets. Each armature element has a length equal to the total thickness of an electromagnet, i.e., the thickness of the toroidal winding increases by the thickness of the pole shoe on opposite sides of the winding.

That linear stepping motor has accordingly the same drawbacks as the linear stepping motor described above, namely, an inaccurately defined and unstable quiescent position. In this prior linear stepping motor, this problem has also been recognized and to offer a solution for it, the shaft carrying the armature elements is provided at one end with a rack, adapted to be engaged by a locking member so that the shaft may be locked in the various quiescent positions. Such a construction is naturally expensive and prone to wear, and therefore undesirable.

It is further observed that US-A-4,439,698 discloses a linear stepping motor with three energizing windings wound on plastics flanges and capable of moving along a stationary bar provided with armature elements and extending through the central apertures of the successive windings. In that linear stepping motor, the length of each of the windings may be equal to that of the armature elements. As, however, in that prior motor, there are no pole shoes on opposite sides of the coils, a slight displacement of a coil from the quiescent state does not immediately result in a major change of the flux resistance to the magnetic field lines of that coil, so that, for the reasons described above, in this motor, too, the positioning in the quiescent state is inaccurate and unstable.
It is true that the patent mentions that, if desired, the coils may be stationary with the bar with armature elements being arranged to move, but such an arrangement does not avoid the disadvantages outlined above.

Finally, it is observed that FR-A-1,337,222 discloses a linear stepping motor according to the preamble of claim 1, in which stepping motor, as in the stepping motor according to the present invention, the pole shoes are arranged between the succesive energizing windings, with the successive energizing windings being so formed that their magnetic field lines extend substantially parallel to the direction of displacement of the motor. This publication, however, relates to a linear motor which is used to impart a longitudinal movement of a rod-shaped structure with rack-like teeth within a tubular housing.

One embodiment of the invention will now be described, by way of example, with reference to the accompanying drawings, in which:

Fig. 1 shows a cross-sectional side view of the motor according to the invention;

Fig. 2 shows a front elevational view of the motor shown in Fig. 1; and

Fig. 3 is a diagrammatic illustration of the possible drive of a motor comprising a plurality of armature elements.

Figures 1 and 2 show a linear stepping motor according to the present invention, which, by way of example, is built up from ten energizing elements 1-1...1-10. Each energizing element comprises on opposite sides pole shoes, which are designated by reference numerals 2-1...2-11, and which pole shoes are made of a ferromagnetic material having a high permeability, e.g., soft iron. The pole shoe between adjacent energizing elements is preferably common to both these elements. Each energizing element comprises further an energizing winding 3, preferably in the form of a coil wound as a toroid, with each coil being embedded in a plastics composition 4, e.g., a plastics composition consisting of Araldite®. The successive energizing elements are configured so that they jointly define at least one flat top.

The row of energizing elements 1-1....1-10 forms the stationary section of the linear stepping motor. It is noted in this connection that the maximum number of energizing elements can be freely selected, depending on the specific application of the motor. As will be explained hereinafter, however, the minimum number of energizing elements is three. Each energizing element is further provided in known manner with terminals for the supply of electric current to each of the energizing windings 3.

The movable section of the linear stepping motor according to the invention consists, in the embodiment illustrated, of a supporting platform 5 made of a material having a low magnetic permeability, e.g., synthetic plastics. Further elements may be secured to or on this platform 5, depending on the application of the linear motor.

At the bottom surface facing the stationary motor section, the carrying platform according to the embodiment shown comprises a pair of armature plates 6 and 6′ of a ferromagnetic material, e.g., again soft iron. As shown in Fig. 2, the carrying platform 5 is guided by means of wheels 7, 7′, secured at the bottom thereof adjacent to the side edges, over rails 8, 8′ secured at the sides of the stationary motor section. In this way the platform can move with low friction relative to the stationary motor section with the distance between the bottom surface of the platform and the top of the successive energizing elements remaining constant. Naturally there are several other ways of guiding the platform 5 relative to the stationary motor section while maintaining an air gap, which manners will readily occur to those skilled in the art. These will not, therefore, be described further herein, the less so as the guiding structure does not constitute an essential part of the present invention.

As shown in Fig. 1, the width of the portion of each of the energizing elements located between the two pole shoes, i.e., the thickness of the synthetic plastics composition 4 with the coil therein, is equal to "a". According to the essence of the present invention, the width of each of the armature elements 6, 6′ is also equal to "a" with slight tolerance limits. At the same time, the armature elements 6, 6′ are arranged on the carrying platform 5 so that when, as shown in Fig. 1, armature element 6 is located exactly over the energizing element 1-4 or one of the other energizing elements, the element 6′ is located symmetrically between the elements 1-5 and 1-6 or symmetrically relatively to a pair of other adjacent energizing elements. If the width of each of the pole shoes 2-1....2-11 is equal to b, it can be said that when two armature elements are used the distance d between them must satisfy the formula $d = \frac{a}{2} + \frac{3}{2}b + n(a + b)$, n = 0,1,2,3...m. As shown in Fig. 2, the length of the armature elements may be equal to the length of the energizing elements, but this is not an essential feature. The thickness of the armature elements 6, 6′ and that of pole shoes 2 is not essential either. These dimensions can be suited to the specific wishes or requirements of the user. The distance between the bottom of the armature elements 6, 6′ and the top of the stationary motor section, i.e., the size of the air gap, is preferably as small as possible to minimize the magnetic flux resistance to the field lines of the activated energizing element. The minimum distance is determined by the manufacturing tolerances of the energizing elements 1-1....1-10 and by the movable motor section with the armature plates, and also by the possible expansion under temperature influences, such as when coils 3 are warmed up when current flows through them. A practical value for the amount of the air gap is about 0.1 mm.

The operation of the motor shown in Figs. 1 and 2 is as follows. In the condition shown in Fig. 1, the winding 3 of energizing element 1-4 is activated, so that the magnetic field lines extend in a path indicated schematically by line 3′. In the position shown, with energizing element 1-4 being activated, the position of the carrying platform is highly stable, because any shift, either to the right or to the left, viewed in Fig. 1, results immediately in a considerable increase of the air gap between the armature element 6 and the pole shoe 2-4 or 2-5, depending on the direction of movement. As the magnetic field generated by the winding 3 of the energizing element 1-4 seeks a minimum flux resistance to the field lines of the magnetic field generated by that winding, the armature element 6 will remain exactly positioned intermediate pole shoes 2-4 and 2-5.

If it is desired to move the movable motor section to the right, viewed in Fig. 1, from the condition shown in that figure, the current to winding 3 of the energizing element 1-4 is interrupted and the current to winding 3 of the energizing element 1-6 is switched on. Through that winding 3 there will now be formed a magnetic field with the configuration shown diagrammatically by a dotted line 3″ in the figure, as a result of which armature element 6′ is moved to the right as viewed in the figure until the magnetic flux resistance to the field lines of the magnetic field formed by the winding of the energizing element 1-6 is minimal, i.e., with armature element 6′ exactly between the pole shoes 2-6 and 2-7 of that energizing element.

A displacement to the left, viewed in Fig. 1, can be realized by activating, instead of energizing element 1-7, the winding 3 of the energizing element 1-5, so that the armature element 6′ comes to lie exactly between the pole shoes 2-5 and 2-6 of that energizing element.

It will be clear that, by a suitable succession of activating commands for the windings of the energizing element 1-1....1-10, the movable motor section with the armature elements 6, 6′ can be incrementally displaced at choice to any position above these energizing elements, with the extreme positions being that in which armature element 6 is located over energizing element 1-1, at one end, or armature plate 6′ being located over energizing element 1-10, at the other end. The size of the increment when displacing the movable motor section is determined when two armature elements are used by the width a of each of the

energizing elements 1-1....1-10 and by the width of each of the pole shoes, which is equal to b. Accordingly, the increment equals (a + b)/2.

Fig. 3 shows the way in which, by using more than two armature elements, the incremental size can be reduced, and so the number of possible stable positions per unit length of the stationary motor section increased. Fig. 3 shows, highly schematically, 10 energizing elements 1a-1j, which each correspond to one of the energizing elements 1-1....1-10 of Fig. 1. For clarity, the pole shoes have been omitted. Each energizing element, however, just as in Fig. 1, has a width a + b, with b being the width of a pole shoe and a the width of the energizing winding and the synthetic plastics in which it is embedded.

As also shown diagrammatically in Fig. 3, the movable section of the motor is provided with five armature elements 6a-6e. By simple calculation it is seen that when x armature elements are used, the incremental size is

$$\frac{a+b}{x},$$

and that, in that arrangement, the distance between successive armature elements should be

$$\frac{a+(x+1)b}{x}.$$

The armature elements are shown in five successive positions, indicated on the left-hand side in Fig. 3 by 1-5, while the figure indicates on the right-hand side which energizing element must be activated in each of the successive positions shown. For the movable section to move from position 3, in which armature element 6d is located exactly over energizing element 1g, to position 4, in which armature element 6c is located exactly over energizing element 1f, the current to energizing element 1g should be interrupted, and that to energizing element 1f should be switched on.

Using five armature elements, therefore, a minimum stepping increment of (a + b)/5 can be realized. If still a smaller stepping increment is desirable, the number of armature elements can be increased still further. For most purposes, however, a small number of armature elements, e.g., two or three, is sufficient to realize positioning with a sufficient number of possible positions.

## Claims

1. A linear stepping motor comprising a stationary section and a movable section (5,6), the stationary section including at least three energizing elements (1-1....1-10) located in one row in the direction of displacement of the movable section and each having an energizing winding (3,4) and at least one pole shoe (2-1....2-11) of ferromagnetic material, with the dimensions of the successive energizing elements, as viewed in the direction of displacement of the movable section being essentially equal; the movable section having a bottom surface facing a top surface of the stationary section and at said bottom surface including at least two armature elements (6,6') of a ferromagnetic material, spaced a predetermined distance apart in the direction of displacement of the movable section; and means (7,8) for supporting and guiding said movable section relatively to said stationary section with an air gap between the armature elements and the top surface of the stationary section, characterized in that the pole shoes (2-1....2-11) are arranged between the successive energizing windings (3,4); that the successive energizing windings are so formed that their magnetic field lines extend substantially parallel to the direction of displacement of the movable section; that the armature elements (6,6') are separate members arranged on a material (5) having a low magnetic permeability, and that the dimension (a) of each of the armature elements, viewed in the direction of displacement of the motor, is essentially equal to the distance (a) between the pole shoes bordering one energizing winding.

2. A linear stepping motor as claimed in claim 1, characterized in that the distance between the successive armature element (6,6') is defined by:

$$\frac{a+(x+1)b}{x} \qquad (1)$$

wherein
a = the width of the energizing winding (3,4) of each of the energizing elements (1-1....1-10),
b = the width of a pole shoe (2-1....2-11) between two adjacent energing windings, and
x = the number of armature elements.

3. A linear stepping motor as claimed in claim 1 or 2, characterized in that the incremental size is determined by

$$\frac{a+b}{x} \qquad (2).$$

4. A linear stepping motor as claimed in any of claims 1-3, characterized in that the pole shoes (2-1....2-11) are essentially flat plates.

5. A linear stepping motor as claimed in any of claims 1-4, characterized in that the energizing windings (3,4) are toroidially wound coils (3), the main plane of which is parallel to the pole shoes.

**Patentansprüche**

1. Linearschrittmotor, mit einem stationären Abschnitt und einem bewegbaren Abschnitt (5,6), wobei der stationäre Abschnitt wenigstens drei Erregerelemente (1-1....1-10) umfaßt, die in einer Reihe in der Richtung der Verlagerung des bewegbaren Abschnittes angeordnet sind, und wobei jedes eine Erregerwicklung (3,4) und wenigstens einen Polschuh (2-1...2-11) aus ferromagnetischem Material hat, wobei die Abmessungen der aufeinanderfolgenden Erregerelemente, gesehen in der Richtung der Verlagerung des bewegbaren Bereiches, im wesentlichen gleich sind; wobei der bewegbare Abschnitte eine Bodenfläche hat, die einer Deckenfläche des stationären Abschnittes zugewandt ist, und an der Bodenfläche wenigstens zwei Ankerelemente (6,6') eines ferromagnetischen Materials umfaßt, um einen vorbestimmten Abstand in der Richtung der Verlagerung des bewegbaren Abschnittes angeordnet; und mit einer Einrichtung (7,8) zum Tragen und Führen des bewegbaren Abschnittes relativ zu dem stationären Abschnitt mit einem Luftspalt zwischen Ankerelementen und der Deckenfläche des stationären Abschnittes, dadurch gekennzeichnet, daß die Polschuhe (2-1....2-11) zwischen den aufeinanderfolgenden Erregerwicklungen (3,4) angeordnet sind; und daß die aufeinanderfolgenden Erregerwicklungen so ausgebildet sind, daß ihre magnetischen Feldlinien sich im wesentlichen parallel zu der Richtung der Verlagerung des bewegbaren Abschnittes erstrecken; daß die Ankerelemente (6,6') getrennte Teile sind, die auf einem Material (5) mit einer geringen magnetischen Permeabilität angeordnet sind, und daß die Abmessung (a) jedes der Ankerelemente, gesehen in der Richtung der Verlagerung des Motors, im wesentlichen gleich dem Abstand (a) zwischen den Polschuhen ist, die an eine Erregerwicklung angrenzen.

2. Linearschrittmotor nach Anspruch 1, dadurch gekennzeichnet, daß der Abstand zwischen den aufeinanderfolgenden Ankerelementen (6,6') definiert ist durch:

$$\frac{a+(x+1)b}{x} \qquad (1),$$

wobei
a = die Breite der Erregerwicklungen (3,4) jedes der Erregerelemente (1- 1....1-10),
b = die Breite eines Polschuhes (2-1....2-11) zwischen zwei benachbarten Erregerwicklungen und
x = die Anzahl der Ankerelemente ist.

3. Linearschrittmotor nach Anspruch 1 oder 2, dadurch gekennzeichnet, daß die inkrementale Größe bestimmt ist durch

$$\frac{a+b}{x} \qquad (2).$$

4. Linearschrittmotor nach einem der Ansprüche 1 bis 3, dadurch gekennzeichnet, daß die Polschuhe (2-1....2-11) im wesentlichen ebene Platten sind.

5. Linearschrittmotor nach einem der Ansprüche 1 bis 4, dadurch gekennzeichnet, daß die Erregerwicklungen (3,4) torisch gewickelte Spulen (3) sind, deren Hauptebene parallel zu den Polschuhen ist.

**Revendications**

1. Un moteur pas à pas linéaire comprenant une partie fixe et une partie mobile (5, 6), la partie fixe comprenant, au moins, trois éléments d'excitation (1-1 ... 1-10) disposés sur un seul rang dans la direction de déplacement de la partie mobile, chacun d'eux comprenant un enroulement d'excitation (3, 4) et, au moins, une pièce polaire (2-1 ... 2-11) en matériau ferromagnétique, les dimensions des éléments d'excitation successifs, observés dans la direction de déplacement de la partie mobile, étant sensiblement égales; la partie mobile comprenant une surface de fond tournée vers la surface supérieure de la partie fixe et ladite surface de fond comprenant, au moins, deux éléments d'induit (6, 6') en matériau ferromagnétique, espacés d'une distance prédéterminée dans la direction de déplacement de la partie mobile; et des moyens (7, 8) pour supporter et guider ladite partie mobile par rapport à ladite partie fixe, avec un entrefer entre les éléments d'induit et la surface supérieure de la partie fixe, caractérisé en ce que les pièces polaires (2-1 ... 2-11) sont disposées entre les enroulements d'excitation successifs (3, 4); que les enroulements d'excitation successifs sont agencés de manière que leurs lignes de champ magnétique s'étendent sensiblement parallèlement à la direction de déplacement de la partie mobile; que les éléments d'induit (6, 6') sont des éléments séparés montés sur un matériau (5) à faible perméabilité magnétique, et que la dimension (a) de chaque élément d'induit, vue dans la direction de déplacement du moteur, est sensiblement égale à la distance (a) entre les pièces polaires limitant un enroulement d'excitation.

2. Un moteur pas à pas linéaire selon la revendication 1, caractérisé en ce que la distance entre les éléments d'induit successifs (6, 6') est définie par :

$$\frac{a + (x + 1)b}{x} \qquad (1)$$

où :
a = largeur de l'enroulement d'excitation (3, 4) de chaque élément d'excitation (1-1 ... 1-10),
b = largeur de la pièce polaire (2-1 ... 2-11) entre deux enroulements d'excitation adjacents, et
x = nombre d'éléments d'induit.

3. Un moteur pas à pas linéaire selon la revendication 1 ou 2, caractérisé en ce que la valeur de l'incrémentation est déterminée par

$$\frac{a + b}{x} \qquad (2)$$

**4.** Un moteur pas à pas linéaire selon l'une quelconque des revendications 1 à 3, caractérisé en ce que les pièces polaires (2-1 ... 2-11) sont essentiellement des plaques plates.

**5.** Un moteur pas à pas linéaire selon l'une quelconque des revendications 1 à 4, caractérisé en ce que les enroulements d'excitation (3, 4) sont des bobinages à enroulement toroïdal (3) dont le plan principal est parallèle aux pièces polaires.

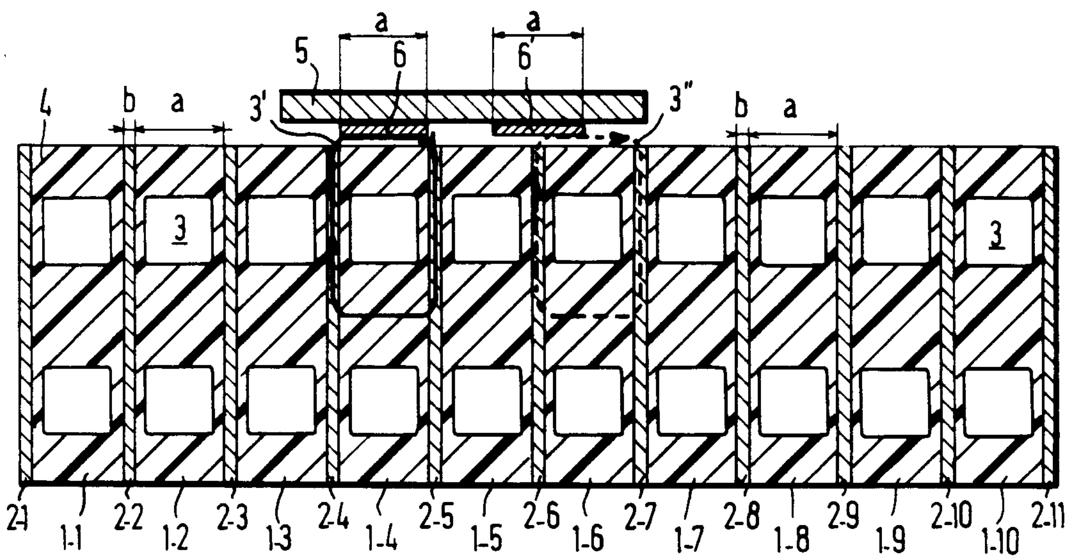


FIG. 1

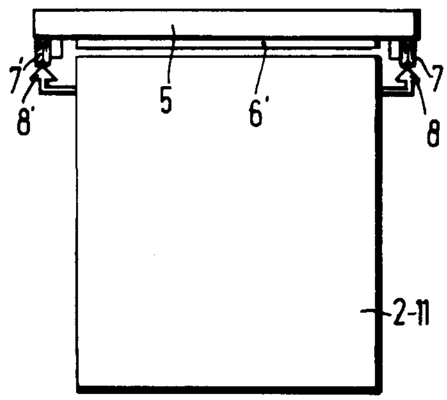


FIG. 2

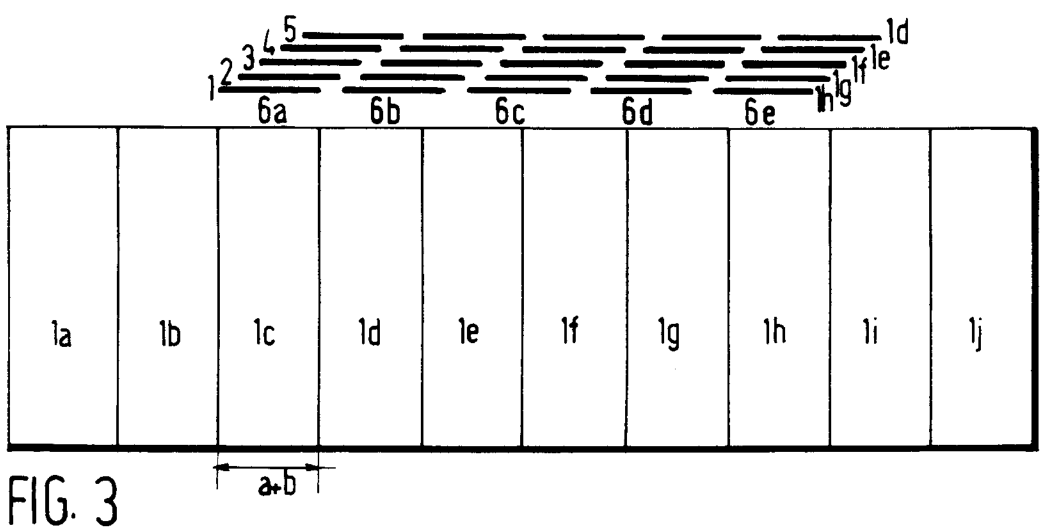


FIG. 3